# EUROPEAN PATENT SPECIFICATION

(11) **EP 0 984 714 B1**
(45) Date of publication and mention of the grant of the patent: **16.07.2003**
(21) Application number: 98921653.6
(22) Date of filing: 19.05.1998
(51) Int. Cl.: A47J 27/21

(54) **ELECTRICAL HEATING ELEMENT**
ELEKTRISCH ERHITZUNGSELEMENT
ELEMENT DE CHAUFFAGE ELECTRIQUE

(30) Priority: 19.05.1997 GB 9710096
(43) Date of publication of application: 15.03.2000
(73) Proprietor: OTTER CONTROLS LIMITED, Buxton Derbyshire SK17 6LA (GB)
(72) Inventor: O'NEILL, Robert, Andrew, Buxton, Derbyshire SK17 9NQ (GB); HADFIELD, Robert, Henry, Cheshire SK6 6DF (GB)
(74) Representative: Milhench, Howard Leslie
(86) International application number: GB9801439
(87) International publication number: WO98052447

(56) References cited:
- EP-A- 0 180 693
- WO-A-96/22718
- DE-A- 3 739 318
- GB-A- 2 222 025
- GB-A- 2 283 155
- GB-A- 2 307 362

## Description

### Field of the Invention:

This invention concerns improvements relating to electrical heating elements as employed, for example, in electrically powered water heating jugs and kettles. More particularly, the invention is concerned with the making of power supply connections to such heating elements.

### Background of the Invention:

Electrical heating elements in water heating jugs, kettles and other water heating appliances have conventionally been of the type comprising a wire wound resistance heating portion housed within a tubular metal sheath and with an electrically insulating material packed into the sheath around the resistance heating portion. At the ends of the resistance heating portion, more substantial metal end terminations known as "cool rods" or as "element cold tails" were commonly provided which projected from the ends of the element sheath and these served for the making of electric connections to the heating element, commonly by virtue of being screw-threaded so that an electric wire could be affixed thereto. EP-A-180 693 discloses a heating kettle of this kind.

The electrical heating elements described above are but examples of known forms of heating elements which have in common the provision of means for the connection to the heating element of power supply wires, such means comprising for example screw threaded or tag type terminations or in some cases welded or riveted on power supply connection wires. The provision of such power supply connection means has been accepted by appliance manufacturers as a necessary evil, since it adds to their manufacturing problems and correspondingly increases the cost of the finished appliance.

### Objects and Summary of the Invention:

It is, accordingly, the principal object of the present invention to overcome or at least substantially reduce the abovementioned problem of making power supply connections to electric heating elements.

According to the present invention there is provided an electrically powered water heating appliance incorporating a thick film heating element comprising a resistive track formed on a substrate, and wherein a control is operatively associated with the heating element, and terminal portions of said track are contacted by spring terminations of an electric supply inlet connector separate from said control.

Considering the example of an electrically powered water heating appliance, a jug or kettle for example, the present invention proposes the provision of a power supply inlet connector in or on the body of the appliance, an electric heating element in the appliance, a separate heating element overtemperature control, and spring terminals in the power supply inlet connector making electrical contact with terminal portions of the electric heating element. The electric heating element is a so-called thick film, planar heating element comprising a support plate or substrate upon which there is provided an electrical resistance heating element in the form of a printed or otherwise formed track having termination pads suitable to be contacted by the spring terminals of the power supply inlet connector for supplying electrical power to the heating element. The arrangement of such a planar heating element and of its associated power supply inlet connector advantageously is such that upon assembly of such parts into the body of an appliance, the spring terminals of the inlet connector make operative contact with the heating element termination pads without necessitating any other electrical connection operations on the part of the appliance manufacturer.

It is well known to provide controls in electrically powered water heating appliances, particularly hot water jugs and kettles, and controls are well known which have the function of sensing the temperature of the heating element and switching off (or reducing) the supply of electricity to the heating element in response to a sensed element overtemperature condition such as might be caused, for example, by switching the appliance on dry or allowing it to boil dry. Element protector controls of this kind are known in which the control incorporates spring terminals which engage terminal portions of the appliance heating element for supplying electricity through the control to the heating element. One such control made by us is the X3 element protector control which is substantially as described in GB-A-2 194 099 with particular reference to Figures 3A, 3B and 3C of the drawings thereof and in GB-A-2 248 724 and is adapted for use with an immersion type of heating element of the aforementioned sheathed, insulated, wire wound resistance heating type having element cold tails adapted to engage the spring terminals of the control. A modified form of the X3 control is the X2 control also manufactured by us which is adapted for use with both of the aforementioned types of planar heating. The X2 control is described in GB-A-2 283 156 and has external spring terminals adapted to engage terminal portions of a planar element when the control is juxtaposed with the element. Notwithstanding these arrangements which use spring terminals of an element protector control to supply electricity through the control to an electric heating element, we are not aware of any prior arrangement where the control is separate from the appliance input connector and electricity is supplied directly from the appliance input connector to the heating element by use of spring terminals contacting terminal portions of the heating element.

The above and further features of the present invention are set forth in the appended claims and, together with their advantages, will be well understood from consideration of the following description given with reference to the accompanying drawing.

### Description of the Drawing:

Figure 1 schematically illustrates an exemplary water heating jug embodying the present invention; and
Figure 2 is a more detailed, exploded, perspective showing of an arrangement of the kind shown in Figure 1.

### Description of the Embodiment:

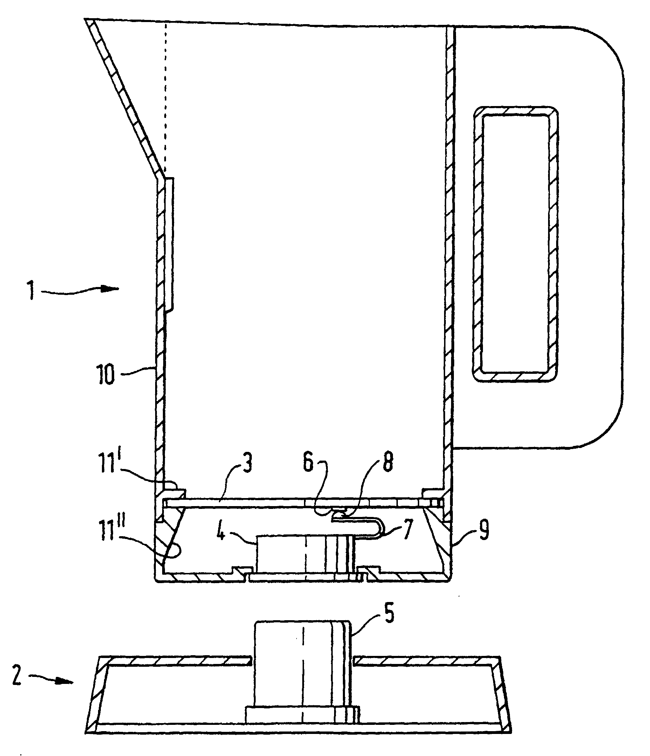

Referring first to Figure 1, there is shown therein an electrically powered cordless hot water jug, that is to say a water heating jug comprising a jug proper 1 and a base unit 2, the jug proper 1 incorporating a heating element 3 and a first connector part 4 and the base unit 2 incorporating a second, complementary connector part 5 adapted to co-operate with the connector part 4 for the supply of electricity via the base unit 2 to the heating element 3 of the jug proper when the latter is seated upon the base unit 2.

In the illustrated arrangement, the connector parts 4 and 5 are the CS4 and CP7 connector system manufactured by Otter Controls Limited. This connector system is the subject of British Patent Application No. 9504233.9 (Serial No. 2 285 716) and provides for the successful mating of the two connector parts irrespective of the rotational orientation of the jug proper 1 relative to the base 2.

The heating element 3 is schematically illustrated as a thick film, planar heating element and could take a number of different forms. For example, the heating element 3 could comprise a stainless steel base plate or substrate having an electrically insulating layer of glass for example on the underside thereof (as viewed in the figure) and with a resistance heating layer or track formed on the insulating layer and overcoated with yet another insulating layer. A protective layer could also be provided on the upper surface of the base plate. In accordance with the present invention, such a heating element will have terminal pads exposed through the outermost insulating layer and preferably having a high silver content for ensuring good electrical connection thereto. An exemplary and exaggerated terminal pad 6 is shown in Figure 1.

The CS4 connector part 4 is customarily provided with three spade terminals adapted for the connection thereto of live, neutral and earth conductor leads to be connected to terminals provided on a heating element or on an associated element protection control which functions to disconnect the element in a sensed element overtemperature condition. In accordance with the present invention, however, the conventional spade terminals of the CS4 connector part 4 are replaced by spring terminals as schematically illustrated in the drawing by reference numeral 7. As shown, the spring terminal 7 is terminated by a contact 8 having a high silver content.

In assembly of the illustrated jug, the CS4 connector part 4 is affixed to a base moulding 9 of the jug and the base moulding 9 is then assembled with a jug body moulding 10 with the periphery of the heating element 3 sealed between opposed flanges 11' and 11" provided on the two parts. The parts are arranged so that when they are assembled together as illustrated, the terminations 8 of the spring terminals 7 of the CS4 connector part 4 engage the terminal pads 6 of the heating element 3. For example, interengaging formations may be provided on the respective parts to ensure their correct relative orientations during assembly. The terminal pads 6 on the heating element 3 will be made sufficiently large to accommodate whatever positional tolerances arise in volume manufacture of the various parts.

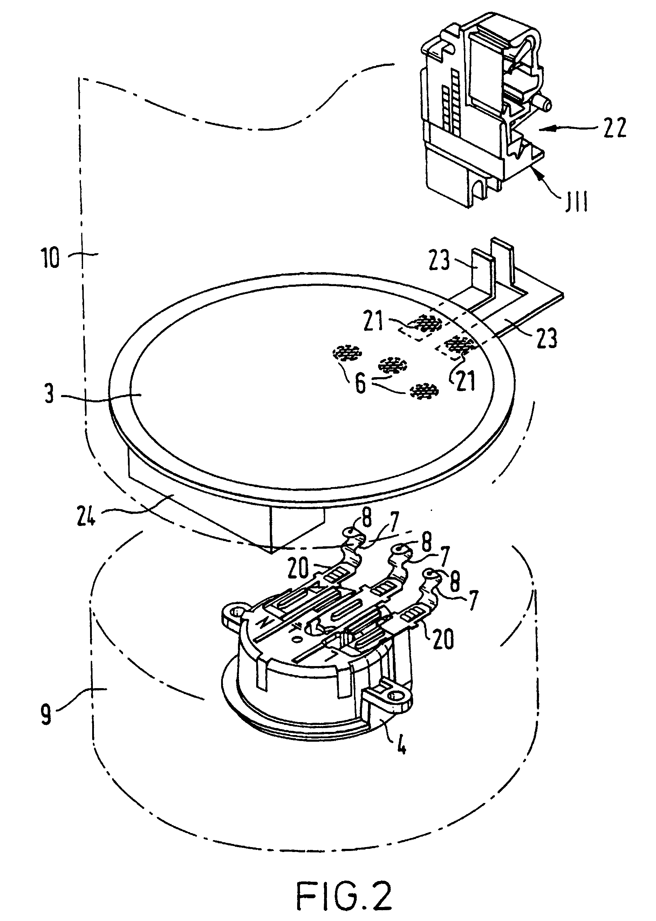

Figure 2 shows an exploded perspective view of the jug proper of the Figure 1 arrangement and employs the same reference numerals as were used in Figure 1 to designate like parts. As shown, the CP7 inlet connector 4 has three spring terminals 7 shown, in this instance, as add-on components attached to the spode terminals 20 that are normally provided on the CP7 inlet connector, and the three spring terminals 7 are topped by silver contacts 8. The thick film heating element 3 has terminal pads 6 on its underside located to be contacted by the spring terminals 7, the central one of the three pads 6 being formed directly upon the stainless steel substrate of the thick film heating element 3 and the other two pads being at respective ends of the resistance heating track of the heating element.

An additional pair of terminal pads 21 is shown on the underside of the heating element 3 for, by way of example, connection of a steam sensor control 22 to the heating element. As is known, steam sensor controls are commonly provided in domestic water heating appliances for switching off the appliance in the event of water boiling in the appliance and giving rise to the generation of steam which is vented onto a thermally-responsive actuator, a bimetal for example, so as to cause a switch to go open circuit. The steam sensor 22 that is illustrated in Figure 2 is a J-type steam sensor as manufactured by Otter Controls and as described in GB-A-2 212 664. The steam sensor 22 shown in Figure 2 has extended spring terminal parts 23 formed to make spring connection to the terminal pads 21 on the heating element 3. Other terminal pads could be provided for the assembly of indicator lamps, buzzers etc to the heating element 3 and such assembly could similarly employ spring connections.

Figure 2 additionally shows in a schematic manner the provision of an on-board control 24 on the underside of the heating element 3. The control 24 may be an element protector control designed to switch off the heating element in the event of a sensed heating element overtemperature condition. As described hereinbefore the control 24 could be an X-series control as manufactured by Otter Controls, for example the X2 control that is described in GB-A-2283 156. Alternatively, the control 24 could be an electronic control formed directly on the printed circuit of which the heating element is a part and/or might comprise PTC (positive temperature coefficient of resistance) material.

From the foregoing it will readily be appreciated that the simple expedient of providing terminal pads on the heating element adapted to be contacted by respective spring contacts of the power supply connector provides advantages for the appliance manufacturer in that the assembly of the appliance makes the correct electrical connections without necessitating additional wiring operations.

While the invention has been described in the foregoing by reference to the Otter Controls CS4/CP7 360° cordless connection system, this is exemplary only. The connector component supplying the heating element by way of spring terminals could be any other cordless appliance inlet or could be a conventional, corded appliance inlet, for example for a 10amp connector according to IEC 320. The invention is applicable to any connector intended for the connection of a power supply to an electric heating element and could, for example, be applied to the terminal block employed for the attachment of a fixed power supply cord (cable) to an appliance, the terminal block being provided with appropriate spring terminals for effecting electrical connection to the heating element of the appliance.

The invention is applicable not only to the making of power supply connections to heating elements, but is applicable furthermore for providing connections to controls and other devices associated with or affixed to the heating element. For example, it has been proposed to provide thick film printed circuit heating elements with integral control circuits configured using surface mounted components. The power supply connections to such integral control circuits could be made, according to the teachings of the present invention, by employing spring connections. In appliances where additional control functions, sensors and/or indicators are provided, separate from any that are provided on the heating element itself, additional connections may be provided on an adapted connector component and the connector component may itself be designed to carry these additional control components, sensors and/or indicators, or to provide conventional quick connect terminals so that connections to these additional control components etc can be made with standard wiring connections. This would avoid the use of soldering or riveting operations which are costly to implement and can cause difficulties as regards standards approvals. Examples of such additional components might as previously mentioned herein be steam sensors (the Otter Controls J1 controls for example), neon indicators, audible alarms, thermal sensors (PTC sensors for example), control relays, and further heating elements to be controlled by the control system on a first element.

## Claims

1. An electrically powered water heating appliance (1,2) **characterized in that** it incorporates a thick film heating element (3) comprising a resistive track formed on a substrate, a control (24) is operatively associated with the heating element (3), and terminal portions (6) of said track are contacted by spring terminations (7) of an electric supply inlet connector (4) separate from said control (24).

2. An electrically powered water heating appliance as claimed in claim 1 configured as a cordless appliance.

3. An electrically powered water heating appliance as claimed in claim 2 wherein the connector system (4,5) of the appliance is such as to permit the appliance proper (1) to be seated on its base (2) irrespective of the relative rotational orientation of the appliance proper and the base.

4. An electrically powered water heating appliance as claimed in any of the preceding claims wherein said control (24) comprises a heating element overtemperature control.

5. An electrically powered water heating appliance as claimed in any of the preceding claims wherein the heating element (3) has additional terminal portions (21) contacted by spring terminals (23) of other electrical devices (22).

## Patentansprüche

1. Elektrisch betriebene Wasserheizvorrichtung (1, 2) **gekennzeichnet durch** ein Dickfilm-Heizelement (3) mit einer auf einem Substrat gebildeten Widerstandsbahn, wobei ein Steuerelement (24) dem Heizelement (3) betriebsmäßig zugeordnet ist und Endbereiche (6) der Bahn **durch** Federenden (7) eines elektrischen, von dem Steuerelement (24) getrennten Versorgungseinlaßanschlusses (4) kontaktiert sind.

2. Elektrisch betriebene Wasserheizvorrichtung nach Anspruch 1, ausgebildet als schnurlose Vorrichtung.

3. Elektrisch betriebene Wasserheizvorrichtung nach Anspruch 2, wobei das Anschlußsystem (4, 5) der Vorrichtung so ausgelegt ist, daß es ein Aufsetzen der Vorrichtung selbst (1) auf ihre Basis (2) unabhängig von der relativen Drehorientierung zwischen der Vorrichtung selbst und der Basis ermöglicht.

4. Elektrisch betriebene Wasserheizvorrichtung nach einem der vorstehenden Ansprüche, wobei das Steuerelement (24) eine Überhitzungskontrolle für das Heizelement aufweist.

5. Elektrisch betriebene Wasserheizvorrichtung nach einem der vorstehenden Ansprüche, wobei das Heizelement (3) zusätzliche Endbereiche (21) aufweist, die durch Federenden (23) anderer elektrischer Vorrichtungen (22) kontaktiert sind.

## Revendications

1. Appareil de chauffage électrique à eau (1, 2) **caractérisé en ce qu'**il comprend un élément de chauffage à film épais (3) comprenant un cheminement résistif formé sur un substrat, une commande (24) qui est associée de manière opérationnelle avec l'élément de chauffage (3), et des parties de borne (6) dudit cheminement qui sont en contact avec des terminaisons de ressort (7) d'un connecteur d'entrée d'alimentation électrique (4) séparé de ladite commande (24).

2. Appareil de chauffage électrique à eau selon la revendication 1 configuré comme un appareil sans fil.

3. Appareil de chauffage électrique à eau selon la revendication 2 dans lequel le système de connecteur (4, 5) de l'appareil est tel qu'il permet d'installer le appareil proprement dit (1) sur sa base (2) sans tenir compte de l'orientation en rotation relative de l' appareil proprement dit et de la base.

4. Appareil de chauffage électrique à eau selon l'une quelconque des revendications précédentes, dans lequel ladite commande (24) comprend une commande de température excessive de l'élément de chauffage.

5. Appareil de chauffage électrique à eau selon l'une quelconque des revendications précédentes dans lequel l'élément de chauffage (3) possède des parties de borne supplémentaires (21) en contact avec les bornes de ressort (23) des autres dispositifs électriques (22).
